(19) Europäisches Patentamt
European Patent Office
Office européen des brevets

(11) **EP 1 319 859 B1**

(12) **EUROPÄISCHE PATENTSCHRIFT**

(45) Veröffentlichungstag und Bekanntmachung des Hinweises auf die Patenterteilung:
**14.06.2006   Patentblatt 2006/24**

(51) Int Cl.:
**F16D 65/21** (2006.01)

(21) Anmeldenummer: **02027202.7**

(22) Anmeldetag: **05.12.2002**

(54) **Bremsvorrichtung**

Braking device

Dispositif de freinage

(84) Benannte Vertragsstaaten:
**DE ES FR GB IT SE**

(30) Priorität: **12.12.2001   DE 10160965**

(43) Veröffentlichungstag der Anmeldung:
**18.06.2003   Patentblatt 2003/25**

(73) Patentinhaber: **SIEMENS AKTIENGESELLSCHAFT**
**80333 München (DE)**

(72) Erfinder:
• **Hoeger, Reiner, Dr.**
  **93055 Regensburg (DE)**
• **Kappel, Andreas, Dr.**
  **85649 Brunnthal (DE)**
• **Meixner, Hans, Prof.**
  **85540 Haar (DE)**

(56) Entgegenhaltungen:
**EP-A- 0 296 703        DE-A- 19 926 432**
**DE-U- 9 419 802        US-A- 5 079 471**

**Beschreibung**

Die Erfindung betrifft eine Bremsvorrichtung mit einer Bremsbacke, die quer zur Bewegungsrichtung eines zu bremsenden Bremskörpers bewegbar ist.

Derartige Bremsvorrichtungen sind in der Form von hydraulisch betätigten Fahrzeugbremsen allgemein bekannt. Allerdings gewinnen elektrische Bremssysteme und Komponenten durch den leicht durchzuführenden radselektiven Eingriff bei künftigen Fahrzeugkonzepten zunehmend an Bedeutung. Die wirtschaftliche Realisierung elektrischer Bremssysteme hängt maßgeblich von der Verfügbarkeit geeigneter Radbremsen im Hinblick auf Dynamikverhalten, Energiebedarf, Bauraum, Masse Zuverlässigkeit und Kosten ab. Besonders die Kopplung von Aktor und Reibungsbremse durch ein geeignetes, an die Erfordernisse einer Fahrzeugbremse angepasstes Getriebesystem, stellt ein bisher noch nicht zufriedenstellend gelöstes Problem dar.

Denn bei Radbremsen, insbesondere bei Teilbelagbremsen, werden sehr hohe Spannkräfte bei kleinen Betätigungswegen benötigt. Da aber gerade elektromagnetische Wandler zur Bremsenbetätigung - im Gegensatz zu hydromechanischen Wandlern - diesem Anforderungsprofil in der Regel nicht entsprechen, muss durch ein unter Umständen mehrstufiges mechanisches Getriebe eine Anpassung der Wandlerfähigkeiten an die Bremsenanforderungen erfolgen. Im Gegensatz zu einfachen Stellantrieben werden an die Bremsenbetätigung zusätzlich Anforderungen an eine fein dosierbare Verschleißnachstellung des Bremsbelages, eine hochdynamische Lüftspielüberwindung und einen Ausgleich von thermischen Längenänderungen gestellt. Außerdem sollte die elektromechanische Bremse einen hohen Wirkungsgrad innerhalb des breiten Temperaturbetriebsbereiches aufweisen und bei hoher Dynamik der Bremsenbetätigung selbstlösefähig sein. Gleichzeitig bedingen der begrenzte Bauraum am Rad und das Bestreben nach Minimierung der ungefederten Massen möglichst kleine und leichte Systeme. Bei allen diesen vielfältigen Forderungen stellt daher das Getriebe als Bindeglied zwischen Wandler und Bremse ein besonderes Problem dar. Das Getriebesystem übernimmt dabei die rotatorische/translatorische Wandlung und die Abstützung der Bremsenspannkraft z.B. durch ein Planetengetriebe mit nachgeschaltetem Spindelgetriebe. Zur schnellen Überwindung des Lüftspiels und zur feinen Dosierbarkeit der Spannkraft sind auch Lösungen mit einem zweistufigen Getriebe bekannt, wodurch der Aufbau weiter verkompliziert wird.

Aus der EP 0 296 703 A1 ist beispielsweise eine Bremsenbetätigungsvorrichtung bekannt, die einen Ultraschallmotor aufweist. Dieser funktioniert mit einer elastischen Wanderwelle, die durch einen piezoelektrischen Vibrator erzeugt wird. Dieses Motorkonzept wird beispielsweise über ein Planetengetriebe auf eine Bremse mit Bremssattel übertragen.

Ausgehend von diesem Stand der Technik, liegt der Erfindung die Aufgabe zugrunde, eine wirksame mit elektromechanischen Stellantrieben betätigbare Bremsvorrichtung mit kleinem Raumbedarf zu schaffen.

Diese Aufgabe wird erfindungsgemäß dadurch gelöst, dass die Bremsbacke mit Hilfe einer Welle betätigbar ist, die durch Reibschluss mit einem durch ein festkörperaktorisches Antriebselement, insbesondere piezoelektrisches Antriebselement, in eine Verschiebebewegung anregbaren Antriebskörper in eine Drehbewegung versetzbar ist und deren Drehbewegung durch eine auf die Bremsbacke einwirkende Umsetzvorrichtung in eine Verschiebebewegung der Bremsbacke umsetzbar ist.

Bei der Bremsvorrichtung gemäß der Erfindung wird auf die Zwischenschaltung eines Planetengetriebes verzichtet, da das reibschlüssig an der Welle anliegende Antriebselement in der Lage ist, ein sehr hohes Drehmoment aufzubringen. Dadurch kann die Bremsbacke mit hohem Druck auf den Bremskörper gepresst werden. Außerdem kann die Bremsvorrichtung gemäß der Erfindung aufgrund der für elektromechanische Antriebselemente typischen, kurzen Beschleunigungs- und Abbremszeiten und der fehlenden Getriebemasse die verlangten Aktionen nahezu verzögerungsfrei ausführen. Der Verzicht auf ein Getriebe ermöglicht es, die Bremsvorrichtung in kleinen Bauformen herzustellen. Die erfindungsgemäße Bremsvorrichtung beinhaltet einen Antriebsring, der von Piezoaktoren in eine umlaufende Verschiebebewegung anregbar ist. Eine solche Anordnung wird nachfolgend auch als piezoelektrischer Ringmotor oder kurz auch als Piezomotor bezeichnet.

Da der Piezomotor neben einem hohen Drehmoment sehr kurze Hochlauf- und Stoppzeiten im Millisekundenbereich aufweist und sowohl statisch als auch bei hohen Drehzahlen betrieben werden kann, kann das bisher notwendige Planetengetriebe entfallen.

Bei einer weiteren bevorzugten Ausführungsform bildet die Welle einen doppelwirkenden Spindeltrieb, der von einem piezoelektrischen Ringmotor angetrieben wird.

Durch der Spindeltrieb wird das Drehmoment nochmals untersetzt, so dass mit dieser Bremsvorrichtung sehr hohe Bremskräfte aufgebracht werden können.

Weitere Einzelheiten sind Gegenstand der abhängigen Ansprüche.

Im folgenden wird die Erfindung im einzelnen anhand der beigefügten Zeichnung erläutert. Es zeigen:

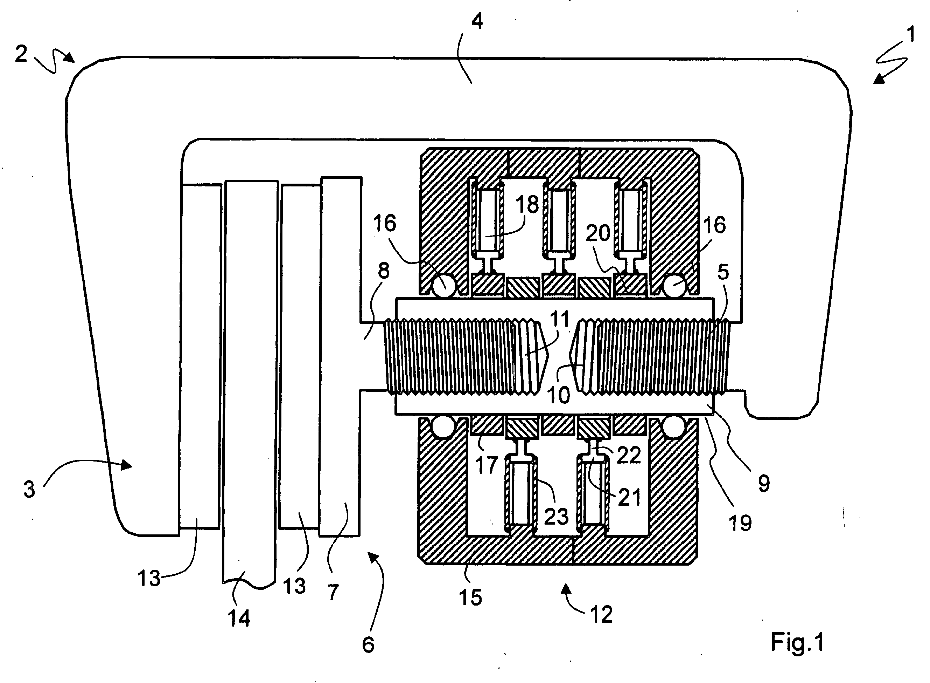

Figur 1                   einen Längsschnitt durch eine elektromechanisch angetriebene Bremsvorrichtung;

| Figur 2 und 3 | eine Querschnittsansicht und eine Längsschnittansicht durch den zum Antrieb der Bremsvorrichtung aus Fig. 1 verwendbaren Piezomotor; |
|---|---|
| Figur 4 und 5 | eine Querschnittsansicht und eine Längsschnittansicht durch einen weiteren zum Antrieb oder Bremsvorrichtung aus Fig. 1 verwendbaren Piezomotor; |
| Figur 6 bis 9 | Längsschnitte durch abgewandelte Ausführungsbeispiele einer elektromechanisch angetriebenen Bremsvorrichtung; |
| Figur 10 und 11 | eine Längsschnittansicht und eine Querschnittsansicht durch eine abgewandelte Ausführungsform eines zum Antrieb der Bremsvorrichtung verwendbaren Piezomotors mit einem eine Hohlwelle antreibenden Antriebsring; |
| Figur 12 und 13 | Längsschnittsansichten durch abgewandelte Ausführungsbeispiele des Piezomotors aus den Figuren 10 und 11; |
| Figur 14 | eine Längsschnittansicht durch eine weiter Bremsvorrichtung mit Nockentrieb; |
| Figur 15 | eine abgewandelte Nockenscheibe für die Bremsvorrichtung aus Figur 14; und |
| Figur 16 und 17 | weitere abgewandelte Bremsvorrichtungen |

Die in Fig. 1 gezeigte Schwimmsattelbremse 1 ist eine Teilbelag-Reibungsbremse. Die Schwimmsattelbremse 1 weist eine Faust 2 auf, welche einen ersten Bremssattel 3, einen Verbindungsarm 4, und eine dem ersten Bremssattel 3 gegenüberliegend am Verbindungsarm 4 angebrachte, erste Gewindestange 5 umfasst. Außerdem verfügt die Faust 2 über einen zweiten Bremssattel 6, der einen Bremssattelteller 7 aufweist, an dem eine zweite Gewindestange 8 angebracht ist. Die erste Gewindestange 5 und die zweite Gewindestange 8 greifen jeweils in eine Spindelhülse 9 ein, die mit zwei gegenläufig geschnittenen Gewindebohrungen 10 und 11 versehen ist. Die Spindelhülse 9 wird von einem piezoelektrischen Rotationsantrieb oder Piezomotor 12 angetrieben. Die sich in die Spindelhülse 9 in axialer Richtung erstreckenden Gewindebohrungen 10 und 11 weisen eine gleiche aber gegenläufige Gewindesteigung auf. Gleiches gilt für die Gewindestangen 5 und 6, die dieselben Gewindemaße wie die korrespondierenden Gewindebohrungen 10 und 11 der Spindelhülse 9 aufweisen, so dass die Gewindestange 5 in die Gewindebohrung 10 der Spindelhülse 9 und die Gewindestange 8 in die Gewindebohrung 11 der Spindelhülse 9 eingeschraubt werden kann.

Zwischen den mit Bremsbelägen 13 ausgestattetem Bremssatteln 3 und 6 befindet sich eine Bremsscheibe 14. Wie bei einer Schwimmsattelbremse üblich, ist bei der Schwimmsattelbremse 1 ein Gehäuse des Piezomotors 12 das einzige Bauteil der Schwimmsattelbremse 1, welches fest mit dem Radträger des Fahrzeuges in Verbindung steht. Die von den Bremssatteln 3 und 6, den Bremsbelägen 13, den Gewindestangen 5 und 8 sowie der Spindelhülse 9 gebildete Faust 2 ist "schwimmend" mit einem Freiheitsgrad in der Wirklinie der Zugspannkraft, also in Richtung der Längsachse der Schwimmsattelbremse 1 gelagert. Durch eine in Fig. 1 nicht dargestellte Verdrehsicherung wird mit Ausnahme der Spindelhülse 9 ein Verdrehen des zweiten Bremssattels 6 und der Faust 2 gegenüber dem Gehäuse 15 des Piezomotors 12 bzw. dem Achsschenkel des Fahrzeuges verhindert, ohne die axiale Bewegung dieser Teile einzuschränken.

Die Spindelhülse 9 ist in dem Gehäuse 15 des Piezomotors 12, beispielsweise mit Hilfe von Kugellagern 16 drehbar gelagert. Die Kugellager 16 dienen zur Aufnahme und Weiterleitung der bei Betätigung der Schwimmsattelbremse 1 auftretenden Kräfte und Momente von der Spindelhülse 9 über das Gehäuse 15 des Piezomotors 12 in den Achsschenkel des Fahrzeuges.

Der Piezomotor 12 für die Spindelhülse 9 umfasst mindestens einen konzentrischen Antriebsring 17, welcher die zylindrische Spindelhülse 9 mit einem geringen Übermaß umschließt. Der Antriebsring 17 kann mittels Piezoaktoren 18 so zu einer kreisförmigen Verschiebebewegung angeregt werden, dass ein ständiger Reibschluss zwischen Antriebsring 17 und Spindelhülse 9 besteht. Hierbei erfolgt ein Abrollen einer Außenfläche 19 der Spindelhülse 9 auf einer Innenfläche 20 des Antriebsringes 17, wodurch die Spindelhülse 9 bezüglich des Gehäuses 15 des Piezomotors 12 in Rotation versetzt wird.

Zur Erhöhung des Drehmomentes können, wie in Fig. 1 gezeigt, mehrere piezoelektrisch angetriebene Antriebsringe 17 parallel geschaltet werden.

Bei nicht angesteuerten Piezoaktoren 18, befinden sich die Antriebsringe 17 mit hoher Kraft auf Anlage mit der Spindelhülse 9, wodurch die Spindelhülse 9 gegenüber Verdrehen gesichert ist. In diesem Fall wirkt die Schwimmsattelbremse als Feststellbremse.

Die Piezoaktoren 18 stützen sich am Gehäuse 15 des Piezomotors 12 ab. Antriebsseitig sind sie über eine Kopfplatte 21 mit einem Stößel 22 mit dem Antriebsring 17 verschweißt. Zur Erhöhung der Lebensdauer des Piezoaktors 18 ist dieser zwischen der Kopfplatte 21 und dem Gehäuse 15 des Piezomotors 12 mit einer hohen mechanischen Druckvorspannkraft eingebaut, die von der weichen, aber starken Rohrfeder 23 erzeugt wird. Zur Erzielung einer möglichst hohen mechanischen Antriebssteifigkeit innerhalb des Piezomotors 12 sind alle Teile vorzugsweise mittels Schweißung miteinander zu verbinden. Zur Ansteuerung der Piezoaktoren 18 werden diese über in Fig. 1 nicht dargestellte, elektrische Zuleitungen 24 von einer Ansteuerungselektronik ge- und entladen.

Nachfolgend wird die Funktion der piezoelektrisch angetriebenen Schwimmsattelbremse näher erläutert.

Fig. 1 zeigt die Schwimmsattelbremse 1 im Grundzustand, in dem die Bremse gelöst ist. Die Bremsbeläge 13 sind von der Bremsscheibe 14 abgehoben, so dass sich das mit der Bremsscheibe 14 verbundene Rad völlig bremsreibungsfrei drehen kann. Zur Betätigung der Schwimmsattelbremse 1 werden die Piezoaktoren 18 mit einem geeigneten Spannungsverlauf und mit einer geeigneten Phasenbeziehung periodisch ge- und entladen, wodurch die Spindelhülse 9 gegenüber dem Gehäuse 15 und den Gewindestangen 5 und 8 in Rotation versetzt wird. Rotationsgeschwindigkeit und Drehmoment der Spindelhülse 9 sind über Frequenz, Spannung und Phase der elektrischen Ansteuerung der Piezoaktoren 18 in weiten Grenzen steuerbar. Zur schnellen Überwindung des Lüftspiels wird der Piezomotor 12 zunächst mit einer hohen Ansteuerfrequenz betrieben. Die Drehrichtung des Piezomotors 12 ist dabei so gewählt, dass die Gewindestangen 5 und 8 durch die gegenläufig geschnittenen Gewindebohrungen 10 und 11 der Spindelhülse 9 simultan und mit gleicher Geschwindigkeit aus der Spindelhülse 9 herausgedreht und die Bremsbeläge 13 in Richtung der Bremsscheibe 14 bewegt werden. Gelangen die Bremsbeläge 13 auf Anlage mit der Bremsscheibe 14 baut sich eine Spannkraft auf, was über die Piezoaktoren 18 detektiert werden kann ("load sensing"), da jeder Piezoaktor 18 gleichzeitig auch ein Piezosensor ist. Die Detektion der Kontaktkraft erfolgt über Signalfilterung der durch die Rückwirkungen in charakteristischer Weise modulierten Piezospannungen. Nun wird entsprechend der Bedarfsanforderung des Fahrers die Drehgeschwindigkeit bzw. das Drehmoment des Piezomotors 12 so gesteuert, dass das gewünschte Bremsmoment erzeugt wird.

Besonders vorteilhaft beim dem hier verwendeten Piezomotor 12 ist die freie Steuerung der Drehgeschwindigkeit vom statischen Haltezustand, über sehr langsame Drehgeschwindigkeiten (Spannkraft) bis hin zu hohen Drehgeschwindigkeiten (Lüftspielüberwindung) in Verbindung mit dem hohen anstehenden Drehmoment.

Zum Lösen der Schwimmsattelbremse 1 wird die Drehrichtung des Piezomotors 12 invertiert, wodurch die Gewindestangen 5 und 8 in die Spindelhülse 9 hineingedreht und die Bremsbeläge 13 von der Bremsscheibe 14 wegbewegt werden.

Durch den Verzicht auf im Kraftübertragungsweg der Faust 2 liegende Kugellager und dem Wegfall des aufgrund des drehmomentstarken Piezomotors 12 nicht benötigten Planetengetriebes, besitzt die in Fig. 1 gezeigte Anordnung neben dem vereinfachten Aufbau eine besonders hohe Steifigkeit in der Zugspannungsrichtung und damit einen hohen elektromechanischen Wirkungsgrad, insbesondere eine geringe Hysterese, was ein einfaches Lösen der Schwimmsattelbremse 1 ermöglicht. Das Kugellager 16 des Piezomotors 12 dient hauptsächlich zur Aufnahme radialer Kräfte. Eine axiale Verschiebung der Spindelhülse 9 bezüglich der Antriebsringe 17 hat auf die Funktion des Piezomotors 12 keinen Einfluss. Dadurch ist auch bei einer geringfügigen Asymmetrie der Bewegung beider Gewindestangen 5 und 8, beispielsweise aufgrund thermischer Ausdehnung, eine vollständig schwimmende Aufhängung der Faust 2 und damit eine symmetrische Krafteinleitung der Bremsbeläge 13 in die Bremsscheibe 14 gewährleistet.

Entsprechend dem Stand der Technik können anstelle der einfachen Gewindespindel 9 auch Kugel- und Rollengewindetriebe eingesetzt werden. Des weiteren eignet sich der für die Faust 2 vorgeschlagene Antriebsmechanismus mit Doppelgewindespindel auch für den Antrieb durch einen beliebigen entsprechend leistungsstarken Elektromotor.

Im folgenden wird nunmehr der Aufbau und die Funktion des Piezomotors 12 im einzelnen beschrieben. Zur Erläuterung der Arbeitsweise seien zunächst die einzelnen Komponenten des in Fig. 1 verwendeten Piezomotors 12 erklärt.

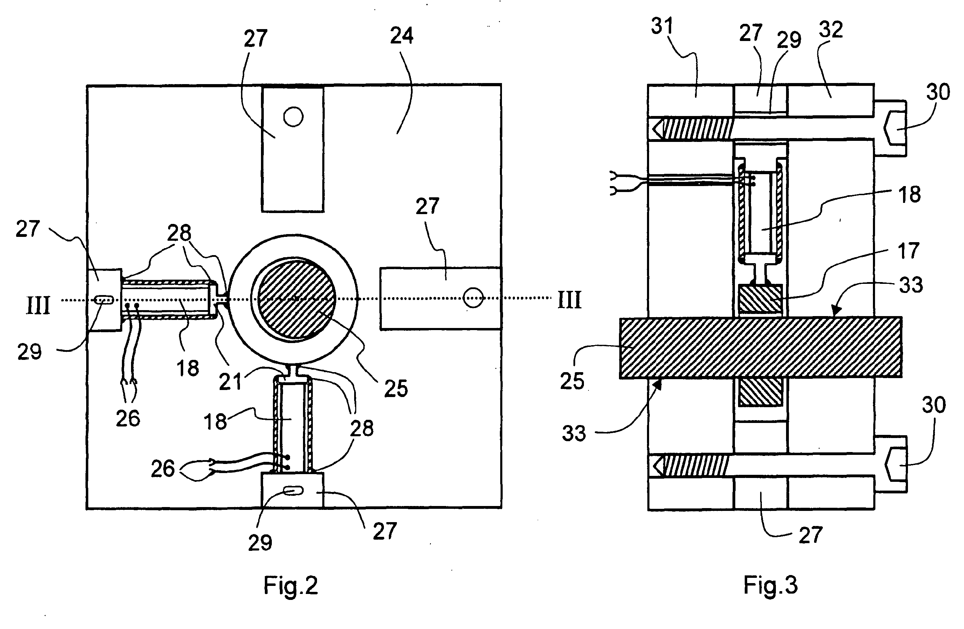

Fig. 2 zeigt Teile des Piezomotors 12 aus Fig. 1 in einer anderen Querschnittsansicht. Der Piezomotor 12 weist mindestens eine mechanischen Grundplatte 24 auf, in der eine Welle 25 des Piezomotors 12 mittels eines nicht dargestellten Lagers möglichst spielfrei drehbar geführt ist. Die Welle 25 kann beispielsweise die in Fig. 1 dargestellte Spindelhülse 9 oder eine beliebige andere Welle sein. Als Antriebselemente dienen vorzugsweise die Piezoaktoren 18, insbesondere piezoelektrische Niedervolt-Multilayer-Aktoren, abgekürzt PMA, die von einem elektrischen Verstärker über die elektrischen Zuleitungen 26 angesteuert werden können. Als Antriebselemente können aber auch andere, sich gesteuert longitudinal ausdehnende Aktoren eingesetzt werden, wie zum Beispiel elektromagnetische, elektrodynamische, elektrostriktive oder magnetostriktive Aktoren.

Durch elektrische Ansteuerung der Piezoaktoren 18 dehnen sich diese gemäß dem Verhalten eines piezoelektrischen Längsaktors näherungsweise proportional der angelegten elektrischen Spannung in axialer Richtung aus. Die Piezoaktoren 18 sind zwischen der Kopfplatte 21, die den Stößel 22 aufweist, einem Lagerblock 27 und der mechanisch möglichst weichen, geschlitzten Rohrfeder 23 unter hoher mechanischer Druckvorspannung verbaut. Die mechanische Druckvorspannung der Piezoaktoren 18 dient einerseits zur Vermeidung einer Schädigung der Piezoaktoren 18 durch Zugspannungskräfte, die sonst im hochfrequenten Dauerbetrieb auftreten können, und andererseits zur Unterstützung der Rückstellung der Piezoaktoren 18, wenn diese elektrisch entladen werden. Da der Hub der Piezoaktoren 18 durch die Rohrfeder 23 verringert wird, sollte diese in bezug auf die Steifigkeit des Piezoaktors 18 eine möglichst kleine Federkonstante aufweisen. Bei Abmessungen des Piezoaktors 18 von 7 x 7 x 30 mm beträgt die Federkönstante des Piezoaktors 18 $C_{Piezo}$ = 50 N/$\mu$m. Bei der einer Federkonstante der Schlitzrohrfeder von $C_{Feder}$ = 3 N/$\mu$m beträgt der durch die Rohrfeder 23 bedingter Hubverlust (1-50/53) * 100 % = 5.7 %.

Die dauerhaft feste Verbindung der Elemente Piezoaktor 18, Kopfplatte 21, Lagerblock 27 und Rohrfeder 23 erfolgt über Schweißverbindungen 28. Der Lagerblock 27 kann mit der Grundplatte 24 über durch Langlöcher 29 geführte Schrauben 30 fest verbunden werden. Diese Verbindung kann auch mit anderen Mitteln, zum Beispiel durch Verschweißung des Lagerblockes 27 mit der mindestens einen Grundplatte 24 hergestellt werden.

Als zentrale Komponente weist der Piezomotor 12 einen möglichst steifen und massearmen konzentrischen Antriebsring 17 mit einem etwas größeren Durchmesser als die Antriebswelle 25 auf, der die drehbar gelagerte Antriebswelle 25 umschließt. Der Antriebsring 17 ist mit den Stößeln 22 so verschweißt, dass er zur Grundplatte 24 einen Abstand aufweist, und der Antriebsring 17 über der Grundplatte 24 somit frei beweglich ist. Die mit der Grundplatte 24 über die Lagerblöcke 27 fest verbundenen Piezoaktoren 18 sind in der Ebene der Grundplatte 24 in einem Winkel von 90 Grad zueinander angeordnet, wobei ihre Hauptwirkrichtung auf den Mittelpunkt des Antriebsringes 17 gerichtet ist.

Ausgehend von der in Fig. 2 gezeigten Ruhestellung kann die Antriebswelle 25 durch Anlegen periodischer um 90 Grad phasenverschobener sinusförmiger Spannungen an die beiden Piezoaktoren 18 in Drehung versetzt werden. Dabei spielt es grundsätzlich keine Rolle, bei welcher absoluten Phasenlage der beiden Ansteuersignale der Piezoaktoren 18 der Piezomotor 12 in Betrieb genommen wird, solange die relative Phasenverschiebung zwischen den beiden sinusförmigen Ansteuersignalen 90 Grad beträgt.

Ausgehend von der in Fig. 2 gezeigten Stellung wird nun mit der periodischen Ansteuerung der beiden Piezoaktoren 18 begonnen, wobei die elektrischen Signalspannungen an den Piezoaktoren 18 der Bedingung:

```
UPMA3.1(t)      =      U0  ×  {1+sin(φ(t)+ (1/2)×π}      [Volt]
```

```
UPMA3.2(t)      =       U0  ×  {1+sin(φ(t)}   [Volt]
```

gehorchen. Hieraus resultiert eine periodische kreisförmige Verschiebung des Antriebsringes 17, die durch den dauerhaften Reibschluss mit der Antriebswelle 25 in eine Drehbewegung der Antriebswelle 25 umgesetzt wird.

Bei der praktischen Umsetzung des Motorprinzips ist mit folgenden Verlustmechanismen zu rechnen: Hysterese der Piezoaktoren 18 und Deformation des Antriebsringes 17 durch mechanische Kräfte.

Diese Einflüsse können jedoch durch eine Entzerrung der Ansteuersignale, die dann nicht mehr genau sinusförmig sind, kompensiert werden. Daneben ist es möglich, die Antriebsringe 17 durch jeweils gegenüberliegende Piezoaktoren 18 anzulenken, um einer Deformation der Antriebsringe 17 entgegenzuwirken.

Bei dem Piezomotor 12 können alle für einen Antriebsmotor relevanten Betriebszustände elektrisch angesteuert werden, zum Beispiel reduziertes Halte/Drehmoment, erhöhtes Haltemoment oder Freilauf der Antriebsachse 25. Ebenso kann die Drehrichtung durch Phasenschiebung der beiden Ansteuersignalspannungen, insbesondere durch Verschieben der Ansteuersignale zueinander um $\pm$ n für die Piezoaktoren 18 kommutiert werden.

Der Piezomotor 12 bietet darüber hinaus folgende weitere Vorteile:

- Minimaler mechanischer Verschleiß durch Abrollen der Antriebswelle 25 auf der Innenfläche 20 des Antriebsringes 17.
- Hohes Drehmoment durch extrem große getriebelose Untersetzung.
- Geringe Geräuschentwicklung durch Abrollen der Antriebswelle 25 auf dem Antriebsring 17.
- Kein Schlupf durch ständigen Reibschluss zwischen Antriebswelle 25 und Antriebsring 17.
- Zum Antrieb eines Antriebsringes 17 des Piezomotors 12 ist eine minimale Anzahl von zwei Piezoaktoren 18 ausreichend. Der Antriebsring 17 kann aber auch von einer größeren Anzahl Piezoaktoren 18 angetrieben werden.
- Die Antriebswelle 25 ist in Grundstellung blockiert; der Piezomotor 12 kann aber auch so ausgelegt werden, dass in Grundstellung ein Freilauf vorhanden ist.
- Das Anfahren beliebiger Betriebspunkte ist möglich:

> die Antriebswelle 25 kann in jeder beliebigen Winkelstellung mit hoher Kraft blockiert oder (an)gehalten werden;

> das Haltemoment und das Antriebsdrehmoment des Piezomotors 12 sind gezielt steuerbar;

> die Antriebswelle 25 kann jederzeit auf Freilauf geschaltet werden, näherungsweise werden dabei beide Piezoaktoren 18 halb ausgesteuert gehalten.

- Der Piezomotor 12 kann statisch, bzw. mit niedriger Ansteuerfrequenz, betrieben werden.
- Der Piezomotor 12 kann hochfrequent betrieben werden.
- der Piezomotor 12 kann sowohl elektrisch als auch mechanisch resonant betrieben werden. Werden elektrische und mechanische Resonanz aufeinander abgestimmt, ergeben sich sehr hohe Leistungswerte und ein hoher Wirkungsgrad.
- Bei vorgegebener Geometrie des Piezomotors 12 sind Drehgeschwindigkeit und Drehmoment elektrisch steuerbar.
- Die Drehrichtung kann durch Kommutierung der Phasenlage der beiden sinusförmigen Ansteuerspannungen der Piezoaktoren 18 kommutiert werden.
- Zwischen den oben angegebenen Betriebsmodi kann im Betrieb beliebig gewechselt werden.
- Der Piezomotor 12 ist in seinen Leistungswerten, Drehmoment und Solldrehzahl, in weiten Grenzen skalierbar. Insbesondere können mehrere piezoelektrisch angetriebene Antriebsringe 17 zum Antrieb einer Antriebswelle 25 verwendet werden.
- Das Untersetzungsverhältnis des Piezomotors 12 ergibt sich aus der Umfangsdifferenz von Außenumfang LM der Antriebswelle 25 zum Innenumfang LR des Antriebsringes 17. Hierzu eine Beispielrechnung: Ein in einer Rohrfeder 23 der Federrate $C_R$ = 3 N/$\mu$m angeordneter Piezoaktor 18 der Baulänge 30 mm besitzt typischerweise eine Leerlaufauslenkung von $x_A$ = 40 $\mu$m bei einer Blockierkraft von $F_B$ = 2120 N. Soll der Antriebsring in jeder Stellung mit einer Kraft von 500 N an die Antriebswelle 25 angepresst werden können, ergibt sich ein nutzbares maximales Spaltmaß von etwa s = 31 $\mu$m. Beträgt der Durchmesser der Antriebswelle 25 dM = 10 mm, so folgt hieraus für das Untersetzungsverhältnis P:

$$P = s/dM = 1/322$$

Das Untersetzungsverhältnis ist damit direkt durch das Verhältnis von Spaltmaß zum Durchmesser der Antriebswellen 25 gegeben. Auf beide Größen kann einfach Einfluss genommen werden, wobei das Drehmoment des Piezomotors 12 natürlich in umgekehrter Weise wie die Motordrehzahl vom Durchmesser der Antriebswelle 25 abhängt. Wird der Piezomotor 12 mit einer Frequenz von 322 Hz betrieben beträgt die Drehzahl der Antriebswelle 25, um beim obigen Beispiel zu bleiben, 1 Umdrehung/sec. Das hierbei vom Piezomotor 12 erzeugte Drehmoment kann aufgrund der Einflüsse der Steifigkeiten von Grundplatte 24, der Schweißverbindungen 28 und derjenigen des Antriebsringes 17 nur abgeschätzt werden. Es liegt im Bereich einiger bis einiger zehn Newtonmeter. Bei fester Ansteuerfrequenz und Ansteueramplitude der Piezoaktoren 18 kann das Drehmoment durch einen größeren Durchmesser von Antriebswelle 25 und Antriebsring 17, bei dann entsprechend geringerer Maximaldrehzahl, jedoch sehr stark erhöht werden. Aufgrund der Tatsache, dass ein solcher Piezomotor 12 bei Frequenzen von etlichen Kilohertz betrieben werden kann, ergeben sich hervorragende elektromechanische Leistungsmerkmale.
- Sowohl die Antriebswelle 25 als auch der Antriebsring 17 sind als Drehteile mit hoher Präzision kostengünstig herstellbar.
- Der Piezomotor 12 ist prädestiniert für den Einsatz der kostengünstigen Niedervolt-Hochleistungsmultilayeraktoren.
- Platzsparender und massearmer Aufbau mit Hochlauf/Stop-Zeiten im Millisekundenbereich.
- Rückwirkungen auf die Antriebswelle 17 können durch elektronische Auswertung der Piezospannungsverläufe detektiert, zum Beispiel einen Klemmschutz oder die Detektion des Kontaktpunktes der Bremsbeläge 13 mit der Bremsscheibe 14 beim Lüftspielausgleich, realisiert werden.

Wichtig für die Funktion des beschriebenen Piezomotors 12 ist eine hinreichend hohe mechanische Steifigkeit des gesamten Aufbaus und eine möglichst spielfrei gelagerte Antriebswelle 17 oder Spindelhülse 9. Zudem wirkt bei den in den vorangegangenen Figuren beschriebenen Aufbauten mit nur einer Grundplatte 24 aufgrund der notwendigen Anpresskraft zwischen Antriebsring 17 und Antriebswelle 25 ein starkes Kippmoment auf die Antriebswelle 17. Dieses Problem kann durch folgende Verbesserungen gelöst werden:

- Eine erste Lösungsmöglichkeit ist in Fig. 3 dargestellt. Dabei ist die piezoelektrische Antriebseinheit, bestehend aus Lagerblock 27, Piezoaktor 18, Stößel 22, gegebenenfalls Hubvergrößerer und Antriebsring 17 zwischen mindesten zwei Grundplatten 31, 32 angebracht, in denen die Antriebswelle 25 spielfrei gelagert oder zumindest hindurchgeführt ist. Neben der höheren mechanischen Steifigkeit der in Fig. 3 abgebildeten Anordnung, liegt ein weiterer Vorteil darin, dass die vom Antriebsring 17 auf die Antriebswelle 25 wirkende Kraft zu keinem Kippmoment auf die Antriebswelle 25 führt. Allerdings müssen Lager 33 immer noch Querkräfte aufnehmen.

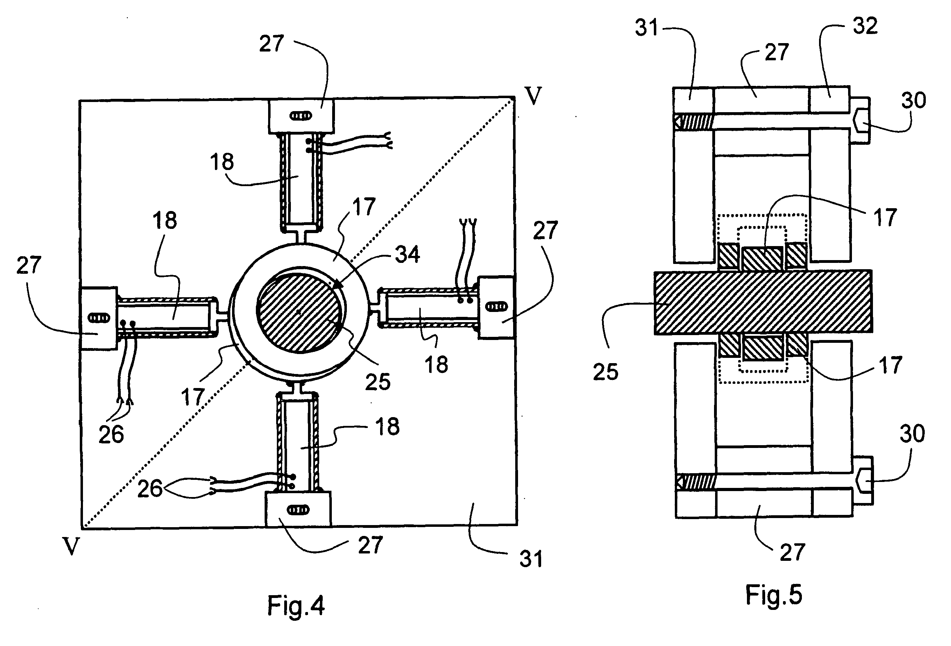

- Eine zweite Lösungsmöglichkeit ist in den Fig. 4 und 5 gezeigt. Hier wird die Antriebswelle 25 mittels mehrerer phasenstarr gekoppelter Antriebsringe 17 angetrieben. Hierdurch kann ein Lager 34 der Antriebswelle 17 völlig kräftefrei gehalten und der nachteilige Einfluss des Lagerspiels gänzlich vermieden werden. Während bei der in Fig. 3 gezeigten Anordnung die Lager 33 immer noch Querkräfte aufnehmen müssen, weshalb eine weitest mögliche Spielfreiheit der Lager 33 für die Funktion wichtig ist, ermöglicht die in Fig. 4 dargestellte Anordnung mit zunächst zwei gleichsinnig angetriebenen und nahe beieinander angeordneten Antriebsringen 17, die von den Antriebsringen 17 über die Antriebswelle 25 auf die beiden Lager 34 wirkenden Querkräfte stark zu minimieren. Dazu sind die beiden Antriebsringe 17 so montiert, dass sich die zwei Kontaktpunkte auf der Antriebswelle 25 gegenüberliegen. Zum Betrieb des Piezomotors 12 werden beide Antriebsringe 17 durch die Piezoaktoren 18 gleichsinnig - also nicht gegenläufig - so verschoben, dass die beiden Kontaktpunkte sich auch im Betrieb immer gegenüberliegen.

Dieses Anordnung lässt sich auch auf mehr als zwei Antriebsringe 17 erweitern. Bei einer solchen Anordnung kann die Antriebswelle 25 oder Spindelhülse 9 völlig kräfte- und momentenfrei gehalten werden. Von dieser Möglichkeit wurde in dem in Fig. 5 gezeigten Piezomotor 12, der drei Antriebsringe 17 aufweist, Gebrauch gemacht. Die Antriebsringe 17 sind dabei so ausgelegt, dass sich die in die Antriebswelle 25 eingeleiteten radialen Kräfte gegenseitig kompensieren. Durch die Führung der Antriebswelle 25 innerhalb der in Fig. 5 gezeigten Antriebsringe 17 kann deshalb sogar das Lager für die Antriebswelle entfallen, da dieses durch die Antriebsringe 17 selber gebildet wird.

Es sei angemerkt, dass die Phasenkoppelung zwischen den einzelnen Antriebsringen 17 auf schaltungstechnischem Wege oder auch mechanisch mit Hilfe der in Fig. 5 gestrichelt eingezeichneten Kopplung erfolgen kann.

Auch bei der Ausführung der Schwimmsattelbremse sind vorteilhafte Abwandlungen möglich.

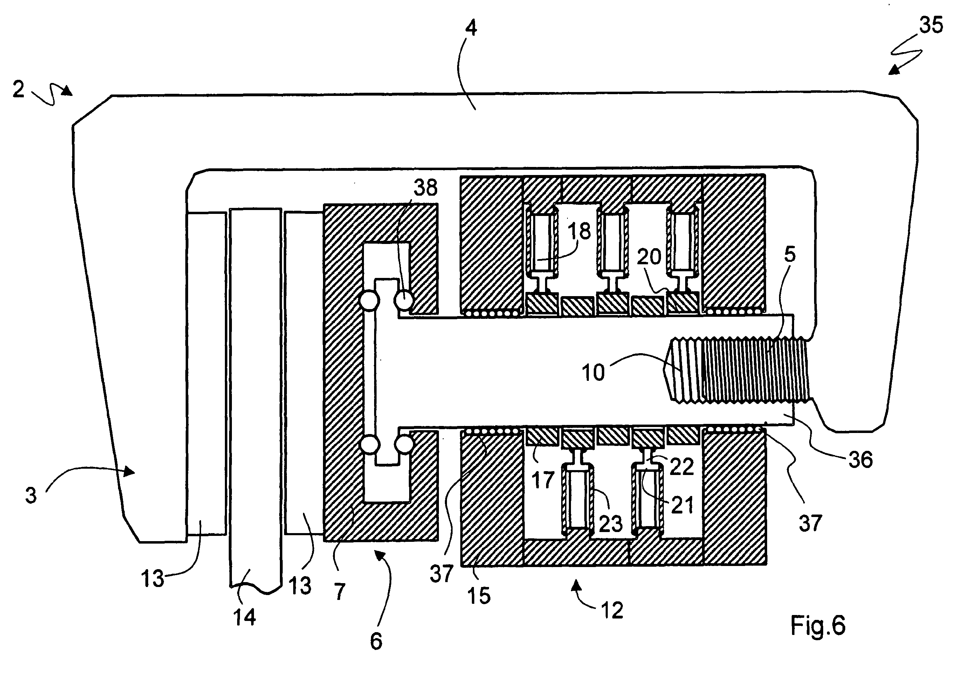

Die in Fig. 6 gezeigte abgewandelte Schwimmsattelbremse 35 weist gegenüber dem in Fig. 1 dargestellten Ausführungsbeispiel nur einen einfachen Spindeltrieb in der Form eines Kugel- oder Rollengewindetriebs auf. Eine Spindelhülse 36 ist derart in einem Kugellager 37 im Gehäuse 15 des Piezomotors 12 geführt, dass sowohl eine rotatorische als auch eine translatorische Bewegung der Spindelhülse 36 bezüglich des Gehäuses 15 möglich ist. Insbesondere ist die Spindelhülse 36 im Gehäuse 15 des Piezomotors 12 axial verschiebbar. Die Kugellager 37 dienen darüber hinaus zur Aufnahme und Einleitung der Bremskräfte und Bremsmomente in das Gehäuse 15 und den Achsschenkel des Fahrzeuges. Weitere Kugellager 38 dienen zur Entkopplung der vom Piezomotor 12 auf die Spindelhülse 36 ausgeübten Drehbewegung vom Bremssattel 6. Translatorische Bewegungen der Spindelhülse 36 in den beiden Hauptbewegungsrichtungen (Spannen und Lösen) werden dadurch direkt in eine Relativbewegung der Bremssattel 3 und 6 übertragen. Ein Verdrehen des zweiten Bremssattels 6 wird durch eine in Fig. 6 nicht dargestellte Führung verhindert. Das Gehäuse 15 des Piezomotors 12 ist mit dem Achsschenkel des Fahrzeuges fest verbunden.

Zur Betätigung der Schwimmsattelbremse 35 wird der Piezomotor 12 elektrisch bestromt und die Spindelhülse 36 mit dem Gewinde 10 bezüglich der nur axial verschiebbaren Faust 2 mit der Gewindestange 5 in Drehung versetzt. Zum Spannen der Schwimmsattelbremse 35 wird die Drehrichtung so gewählt, dass die Gewindestange 5 aus der Gewindebohrung 10 ausfährt, wodurch zunächst das Lüftspiel überwunden und dann die Bremsbeläge 13 auf Anlage mit der Bremsscheibe 14 gebracht werden. Zur schnellen Überwindung des Lüftspiels wird der Piezomotor 12 zunächst mit einer hohen Drehgeschwindigkeit betrieben und nachfolgend zur Erzeugung der Spannkraft mit hohem Drehmoment. Durch den einfachen von der Gewindestange 8 und dem Gewinde 10 gebildeten Spindeltrieb erfolgt zwar eine Relativbewegung der Spindelhülse 36 bezüglich des Gehäuses 15 und den Antriebsringen 17. Dieses hat auf die Funktion des Piezomotors 12 aber keinen Einfluss.

Zum Lösen der Schwimmsattelbremse 35 wird die Drehrichtung der Spindelhülse 36 invertiert, wodurch die Gewindestange 5 in die Gewindebohrung 10 einfährt und die Bremsbeläge 13 von der Bremsscheibe 14 abgehoben werden.

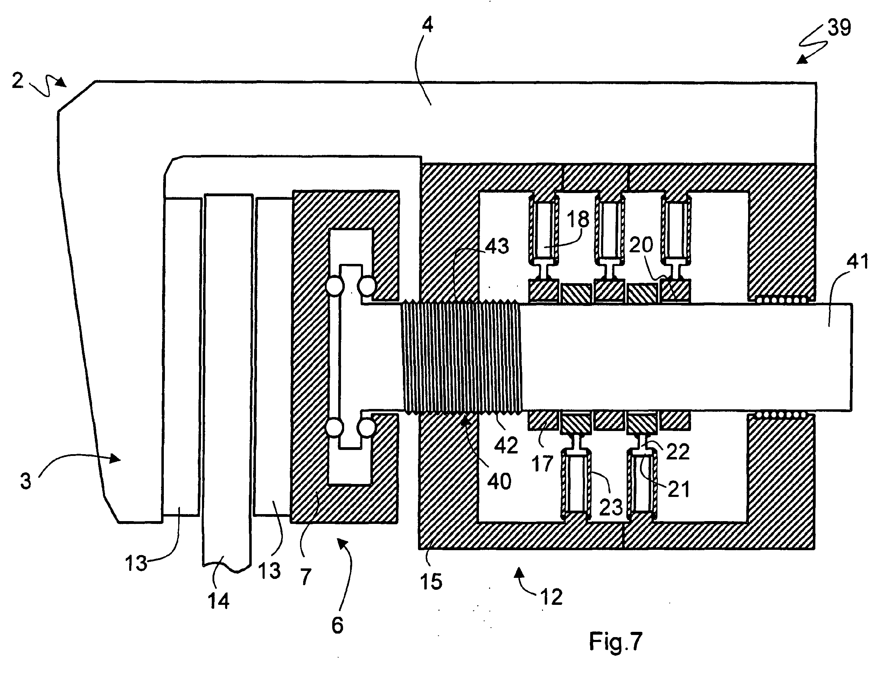

Im Unterschied zu Fig. 6 ist bei einer weiteren, in Fig. 7 dargestellten Schwimmsattelbremse 39 das Gehäuse 15 des Piezomotors 12 ein Bestandteil der Faust 2 oder auch mit dieser mechanisch fest verbunden und ein der Bremsscheibe 14 zugewandtes Lager 40 einer Antriebswelle 41 ist als Spindeltrieb ausgeführt, wobei ein Außengewinde 42 der Antriebswelle 41 in eine Gewindebohrung 43 des Gehäuses 15 eingreift Durch den Spindeltrieb erfolgt bei Inbetriebnahme des Piezomotors 12 eine Relativbewegung der Antriebswelle 25 bezüglich dem Gehäuse 15 des Piezomotor 12 und der hiermit verbundenen Faust 2, die sich auf die Bremsbeläge 13 überträgt.

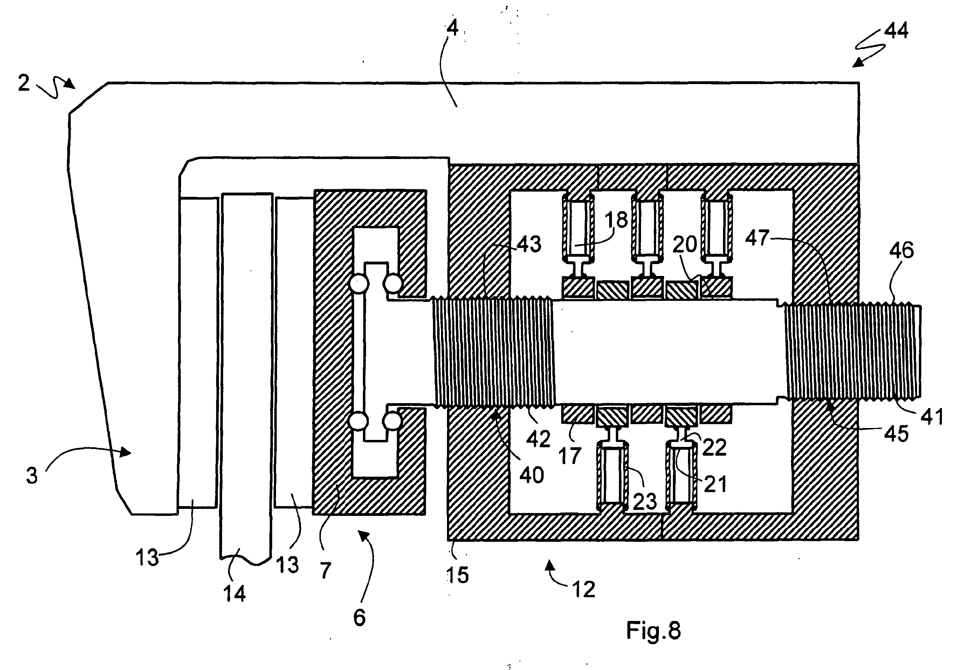

Bei der Schwimmsattelbremse nach Fig. 8 ist auch ein der Bremsscheibe 14 abgewandtes Lager 45 der Antriebswelle 41 als Spindeltrieb, bestehend aus Außengewinde 46 und einer Gewindebohrung 47, ausgeführt. Dabei entspricht die Gewindesteigung des ersten Lagers 40 derjenigen des zweiten Lagers 45. Ebenso ist die Steigung der beiden Spindeltriebe der Lager 40 und 45 gleichsinnig.

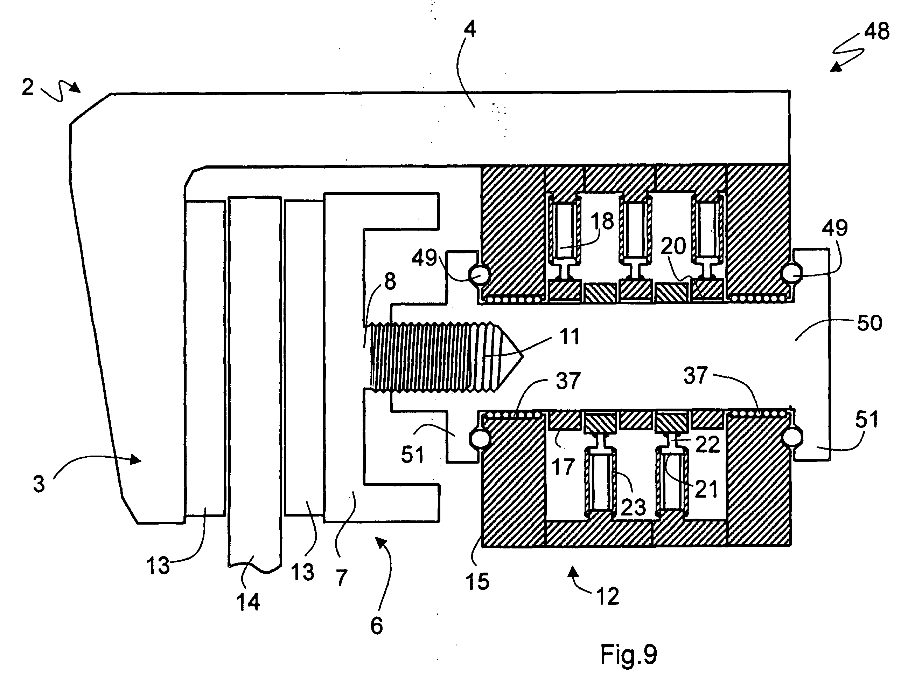

Während bei den Ausführungsbeispielen nach Fig. 6, Fig. 7 und Fig. 8 jeweils beim Betätigen der Bremse eine axiale Verschiebung der Spindelhülse 36 oder Antriebswelle 41 bezüglich des Gehäuses 15 des Piezomotors 12 auftritt, wird dieses bei der in Fig. 9 gezeigten Schwimmsattelbremse 48 durch stirnseitige Kugellager 49, die jeweils zwischen einem an einer Antriebswelle 50 ausgebildeten Kranz 51 und der Wand des Gehäuses 15 angeordnet sind, verhindert. Die Lager 37 dienen wiederum zur Abstützung der Bremskräfte und Bremsmomente. Die axiale Verschiebung des zweiten Bremssattels 6 erfolgt durch einen Spindeltrieb, der von der am Bremssattelteller 7 des zweiten Bremssattels 6 angebrachten, zweiten Gewindestange 8 und der in der Antriebswelle 50 ausgebildeten Gewindebohrung 11 gebildet ist. Durch die der Bremsscheibe 14 zugewandte Anordnung des Spindeltriebes und eine in Fig. 9 nicht dargestellte Drehsicherung des zweiten Bremssattels 6 erfolgt bei Rotation der Antriebswelle 50 abhängig von deren Drehrichtung ein Ein- oder Ausfahren der Gewindestange 8 in die Gewindebohrung 11 und damit eine Relativbewegung der Bremsbeläge 13 in Richtung auf die Bremsscheibe 14 zu oder von dieser weg.

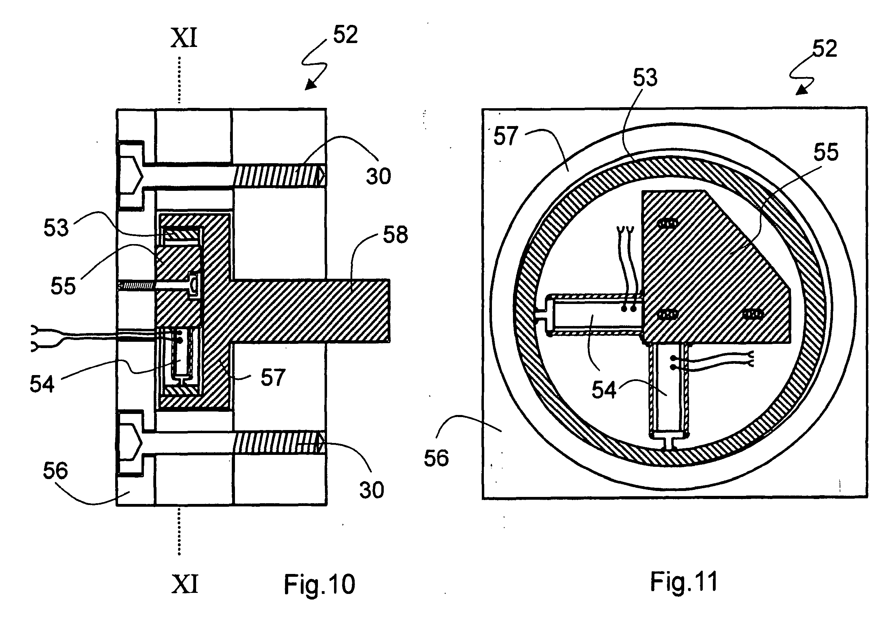

Neben den in den Fig. 1 bis Fig. 9 gezeigten Piezomotoren 12 mit außenliegenden Piezoaktoren 18, sind auch Piezomotoren 52 mit innerhalb eines Antriebsringes 53 liegenden Piezoaktoren 54 möglich. Hierbei treiben mindestens zwei Piezoaktoren 54 den außenliegenden Antriebsring 53 an. Die innenliegenden Antriebsringe stützen sich, wie in Fig. 10 gezeigt, dabei über ein Lager 55 auf einer Grundplatte 56 ab. Der von den Piezoaktoren 54 in eine umlaufende Verschiebebewegung versetzte Antriebsring 53 wirkt auf eine Motorglocke 57 ein, die mit einer Antriebsachse 58 verbunden ist.

Zur besseren Verdeutlichung des Aufbaus zeigt Fig. 11 einen Schnitt durch den in Fig. 10 abgebildeten Piezomotor 52. Da das Untersetzungsverhältnis durch

$$P = s/dM$$

mit s gleich der Spaltbreite zwischen Antriebsring 53 und Motorglocke 57 und dM gleich dem Innendurchmesser der Motorglocke 57 gegeben ist, ermöglicht diese Bauform bei gleichem Volumen ein höheres Drehmoment bei verringerter Maximaldrehzahl.

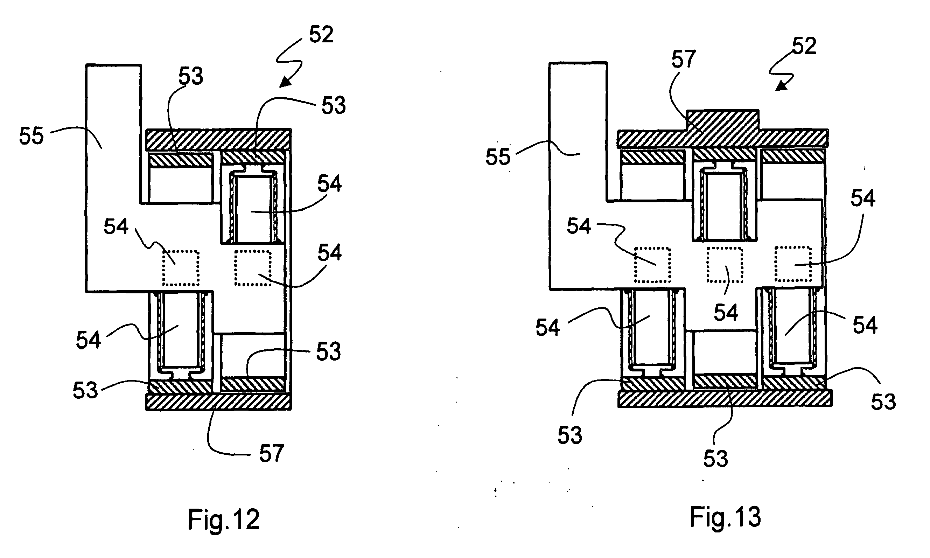

Wie die Fig. 12 und Fig. 13 zeigen, ist es auch hierbei möglich, zur Erhöhung des Drehmomentes mehrere Antriebsringe 53 zum Antrieb der Motorglocke 57 einzusetzen. Dabei sind die Piezoaktoren 54 jeweils über die Schweißverbindungen 28 dem Lager 55 und über weitere Schweißverbindungen 28 mit der Kopfplatte 21 verbunden. Die Kopfplatte 21 wiederum ist über die Schweißverbindungen 28 an den Antriebsringen 53 angebracht, die jeweils die Motorglocke 57 antreiben.

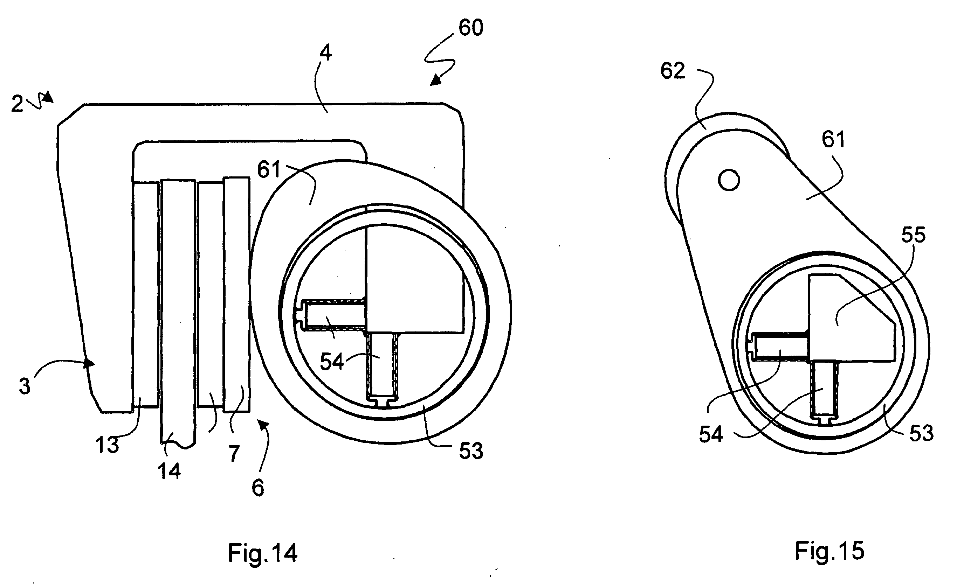

Fig. 14 gibt schließlich ein Beispiel dafür, wie ein solcher Piezomotor 52 mit innenliegenden Piezoaktoren 54 und einer Motorglocke 57 mit Hilfe einer Nockenscheibe 59 zum direkten Antrieb einer Teilbelag-Reibungsbremse 60 eingesetzt werden kann.

Zur Verminderung der Reibung kann auch, wie in Fig. 15 gezeigt, eine Nockenscheibe 61 verwendet werden, die über eine Rolle 62 auf den zweiten Bremssattel 6 einwirkt.

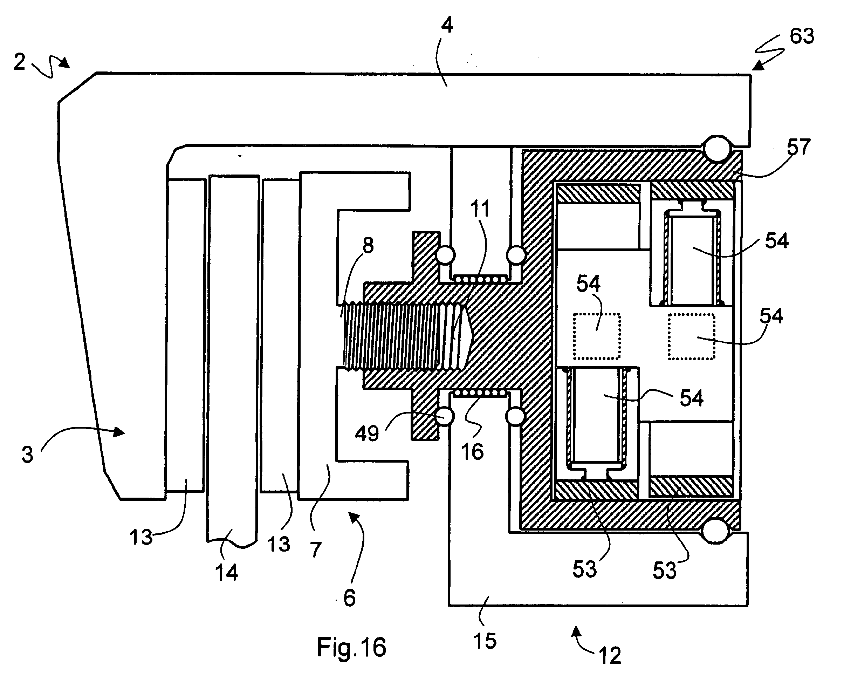

Fig. 16 zeigt die Integration des Piezomotors 52 gemäß Fig. 10 und Fig. 11 mit innenliegenden Piezoaktoren 54 in das Ausführungsbeispiel der elektromechanischen Schwimmsattelbremse 48 nach Fig. 9. Es ist zu erwarten, dass mit einer derartigen Schwimmsattelbremse 63 eine sehr hohe und dabei fein dosierbare Spannkraft erzeugt werden kann.

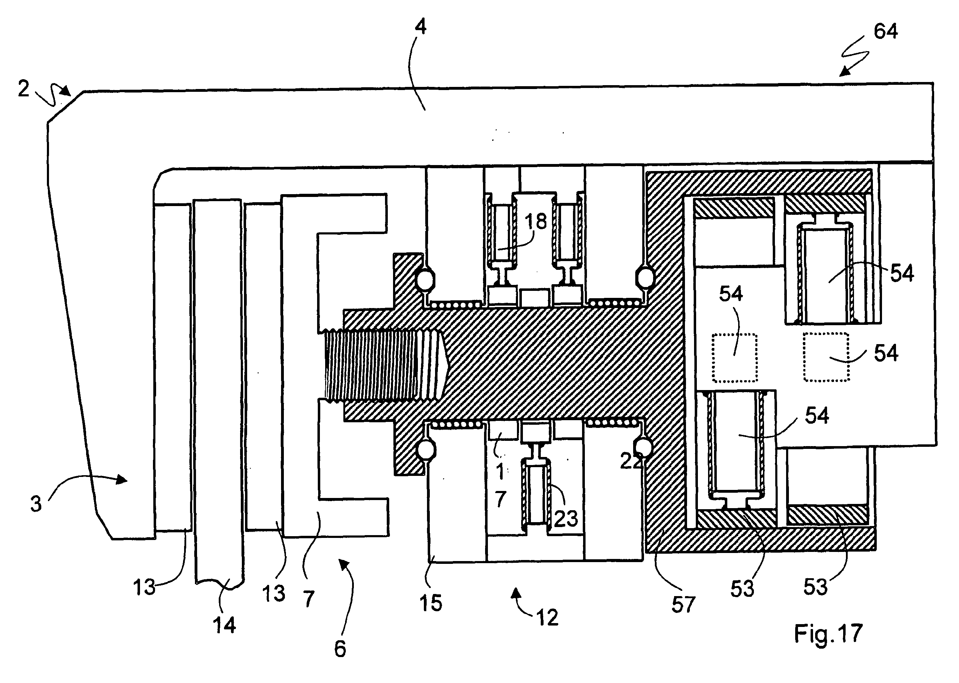

Abschließend zeigt Fig. 17 die Kombination eines schnell laufenden Piezomotors 12 mit außenliegenden Piezoaktoren 18 mit einem langsamer laufenden, aber besonders drehmomentstarken Piezomotor 52 mit innenliegenden Piezoaktoren 54. Bei der in Fig. 17 dargestellten Schwimmsattelbremse 64 kann der Piezomotor 52 auf Freilauf geschaltet werden, so dass das Lüftspiel mit Hilfe des Piezomotors 12 noch schneller überwunden werden kann. Anschließend kann durch Zuschaltung des Piezomotors 52 eine sehr hohe Spannkraft erzeugt werden. Umgekehrtes gilt für das Lösen der Schwimmsattelbremse 64.

Abschließend sei angemerkt, dass das hier vorgestellte Prinzip der Koppelung eines Piezomotors an die Bremssattel einer Schwimmsattelbremsen auch bei anderen Teilscheibenbremsen anwendbar ist. Das Prinzip lässt sich außerdem auch bei Trommelbremsen zur Betätigung der Bremsbacken verwenden. In diesem Fall ist an den Bremsbacken jeweils eine Gewindestange angebracht, die in eine von einem Piezomotor angetriebene Spindelhülse eingreift. Auch das Betätigen der Bremsbacken mit Hilfe eines Nockentriebs ist denkbar.

**Patentansprüche**

1.  Bremsvorrichtung die Folgendes aufweist:

    - eine Bremsbacke (6), die quer zur Bewegungsrichtung eines zu bremsenden Bremskörpers (14) bewegbar ist,
    - eine Umsetzvorrichtung (8, 11, 42, 43, 46, 47, 59, 61) zur Wandlung einer von einer Antriebswelle (9, 25, 36, 41, 50, 57, 58) vorhandenen Drehbewegung in eine auf die Bremsbacke (6) wirkende Kraft,

**gekennzeichnet durch**

einen Antriebsring (17, 53), der **durch** mindestens zwei elektromechanische Stellglieder (18, 54) in eine umlaufende Verschiebebewegung versetzbar ist,

- eine Antriebswelle (9, 25, 36, 41, 50, 57, 58), die **durch** Reibschluss mit dem Antriebsring (17, 53) in eine Drehbewegung versetzbar ist,
- wobei die mindestens zwei elektromechanischen Stellglieder (18, 54) gegeneinander um ungefähr 90° versetzt an dem Antriebsring (17, 53) mechanisch steif, und ungefähr senkrecht zur Achse des Antriebsringes (17, 53) angebracht sind, so dass die Wirkrichtung der elektromechanischen Stellglieder (18, 54) die Achse des Antriebsringes schneidet.

2.  Bremsvorrichtung nach Anspruch 1,
    bei der die elektromechanischen Antriebselemente Piezoaktoren (18, 54) sind.

3.  Bremsvorrichtung nach Anspruch 1 oder 2,
    bei der der Antriebsring (17) die Antriebswelle (9, 25, 36, 41, 50) umgibt.

4.  Bremsvorrichtung nach Anspruch 1 oder 2,
    bei der die Antriebswelle als Hohlwelle (57, 58) ausgebildet ist und bei der der Antriebsring (53) im Inneren der Hohlwelle (57, 58) angeordnet ist.

5.  Bremsvorrichtung nach einem der Ansprüche 1 bis 4,
    bei der der Bremskörper eine mit einem Rad verbundene Bremsscheibe (14) ist, die durch Reibkontakt mit der quer zur Drehrichtung beweglichen Bremsbacke (6) und einer über ein Joch mit der beweglichen Bremsbacke (6) verbundenen Gegendruckbacke (3) bremsbar ist.

6.  Bremsvorrichtung nach einem der vorhergehenden Ansprüche, bei der die Antriebswelle eine Spindelhülse (9, 50) ist, in die eine mit der Bremsbacke (6) verbundene Gewindestange (8) eingreift.

7.  Bremsvorrichtung nach einem der vorhergehenden Ansprüche, bei der die Antriebswelle eine Spindelhülse (9, 36) ist, in die eine Gewindestange (5) eingreift, die an einer Halterung (4) für eine weitere Bremsbacke (3) angebracht ist.

8.  Bremsvorrichtung nach einem der vorhergehenden Ansprüche, bei der die Antriebswelle (41) einen Gewindeabschnitt (42, 46) aufweist, der in eine Gewindebohrung (43, 47) einer Halterung (15) für das Stellglied (18) eingreift.

9.  Bremsvorrichtung nach Anspruch 1,
    bei der an der Antriebswelle (57) eine die Bremsbacke (6) betätigende Nocke (59, 61) ausgebildet ist.

10. Bremsvorrichtung nach einem der vorangegangenen Ansprüche, bei der die aus der Drehbewegung der Welle gewandelte annähernd axiale Kraft in Richtung auf die Bremsbacke oder entgegengesetzt wirkt.


**Claims**

1.  Braking device comprising the following:

    - a brake shoe (6) that can be moved transverse to the direction of movement of a braking body (14) to be braked,
    - a conversion device (8, 11, 42, 43, 46, 47, 59, 61) for the conversion of a rotational movement present on a drive shaft (9, 25, 36, 41, 50, 57, 58) into a force acting on the brake shoe (6),
    **characterized by** a drive ring (17, 53), which can be set into a circumferential displacement movement by at least two electromechanical actuators (18, 54)
    - a drive shaft (9, 25, 36, 41, 50, 57, 58), which can be set into a rotational movement by a friction fit with the drive ring (17, 53),
    - wherein the at least two electromechanical actuators (18, 54) are attached with mechanical rigidity to the drive ring (17, 53) with a phase difference of approximately 90° to each other and approximately perpendicular to the axis of the drive ring (17, 53), so that the direction of action of the electromechanical actuators (18, 54) intersect the axis of the drive ring.

**2.** Braking device according to claim 1,
in which the electromechanical drive elements are piezoactuators (18, 54).

**3.** Braking device according to claim 1 or 2,
in which the drive ring (17) encloses the drive shaft (9, 25, 36, 41, 50).

**4.** Braking device according to claim 1 or 2,
in which the drive shaft is formed as a hollow shaft (57, 58), and in which the drive ring (53) is arranged inside the hollow shaft (57, 58).

**5.** Braking device according to one of the claims 1 to 4,
in which the braking body is a brake disc (14) connected to a wheel, where said braking body can be braked by friction contact with the brake shoe (6) that can move transverse to the direction of rotation, and with a counter-pressure shoe (3) connected to the movable brake shoe (6) via a yoke.

**6.** Braking device according to one of the preceding claims,
in which the drive shaft is a spindle runner (9, 50) in which a threaded post (8) connected to the brake shoe (6) engages.

**7.** Braking device according to one of the preceding claims,
in which the drive shaft is a spindle runner (9, 36) in which a threaded post (5) engages that is attached to a holder (4) for a further brake shoe (3).

**8.** Braking device according to one of the preceding claims,
in which the drive shaft (41) comprises a threaded section (42, 46) that engages in a threaded hole (43, 47) of a holder (15) for the actuator (18).

**9.** Braking device according to claim 1,
in which a cam (59, 61) operating the brake shoe (6) is formed on the drive shaft (57).

**10.** Braking device according to one of the preceding claims,
in which the approximately axial force converted from the rotational movement of the shaft acts towards or away from the brake shoe.


**Revendications**

**1.** Dispositif de freinage qui comprend ce qui suit:

- une mâchoire de frein (6) qui peut être déplacée transversalement par rapport à la direction de déplacement d'un corps de frein (14) à freiner,
- un dispositif de conversion (8, 11, 42, 43, 46, 47, 59, 61) qui convertit un déplacement de rotation existant d'un arbre d'entraînement (9, 25, 36, 41, 50, 57, 58) en une force qui agit sur la mâchoire de frein (6),

**caractérisé par**
une bague d'entraînement (17, 53) qui peut être mise en déplacement de coulissement périphérique par au moins deux organes électromécaniques d'actionnement (18, 54),

- un arbre d'entraînement (9, 25, 36, 41, 50, 57, 58) qui peut être mis en un déplacement de rotation par friction avec la bague d'entraînement (17, 53),
- les au moins deux organes électromécaniques d'actionnement (18, 54) étant décalés l'un de l'autre d'environ 90° et montés de manière mécaniquement rigide sur la bague d'entraînement (17, 53) sensiblement à la perpendiculaire de l'axe de la bague d'entraînement (17, 53), de telle sorte que la direction d'action des organes électromécaniques d'actionnement (18, 54) coupe l'axe de la bague d'entraînement.

**2.** Dispositif de freinage selon la revendication 1, dans lequel les éléments électromécaniques d'entraînement sont des actionneurs piézoélectriques (18, 54).

**3.** Dispositif de freinage selon les revendications 1 ou 2, dans lequel la bague d'entraînement (17) entoure l'arbre d'entraînement (9, 25, 36, 41, 50).

4. Dispositif de freinage selon les revendications 1 ou 2, dans lequel l'arbre d'entraînement est un arbre creux (57, 58) et dans lequel la bague d'entraînement (53) est disposée à l'intérieur de l'arbre creux (57, 58).

5. Dispositif de freinage selon l'une des revendications 1 à 4, dans lequel le corps de freinage est un disque de frein (14) relié à une roue, qui peut être freiné par friction avec des mâchoires de freinage (6) aptes à se déplacer transversalement par rapport à son sens de rotation et une mâchoire de contre-poussée (3) reliée à la mâchoire mobile de freinage (6) par un joug.

6. Dispositif de freinage selon l'une des revendications précédentes, dans lequel l'arbre d'entraînement est une douille filetée (9, 50) dans laquelle s'engage une tige filetée (8) reliée à la mâchoire de freinage (6).

7. Dispositif de freinage selon l'une des revendications précédentes, dans lequel l'arbre d'entraînement est une douille filetée (9, 36) dans laquelle s'engage une tige filetée (5) qui est installée sur un support (4) prévu pour une autre mâchoire de freinage (3).

8. Dispositif de freinage selon l'une des revendications précédentes, dans lequel l'arbre d'entraînement (41) présente une partie filetée (42, 46) qui s'engage dans un alésage fileté (43, 47) d'un support (15) de l'organe d'actionnement (18).

9. Dispositif de freinage selon la revendication 1, dans lequel une came (59, 61) qui actionne la mâchoire de freinage (6) est réalisée sur l'arbre d'entraînement (57).

10. Dispositif de freinage selon l'une des revendications précédentes, dans lequel la force sensiblement axiale convertie à partir du déplacement de rotation de l'arbre agit en direction de la mâchoire de freinage ou dans la direction opposée.

Fig.1

EP 1 319 859 B1

Fig.2

Fig.3

EP 1 319 859 B1

Fig.4

Fig.5

EP 1 319 859 B1

Fig.6

Fig.7

EP 1 319 859 B1

Fig.8

EP 1 319 859 B1

Fig.9

XI

52

53

55

54

56

30

58

57

30

XI

Fig.10

52

53

57

55

54

56

Fig.11

EP 1 319 859 B1

Fig.12

Fig.13

Fig.14

Fig.15

EP 1 319 859 B1

Fig.16

EP 1 319 859 B1

Fig.17

EP 1 319 859 B1